# EUROPÄISCHE PATENTSCHRIFT

(11) **EP 3 293 843 B1**
(45) Veröffentlichungstag und Bekanntmachung des Hinweises auf die Patenterteilung: **07.09.2022**
(21) Anmeldenummer: 17189726.7
(22) Anmeldetag: 07.09.2017
(51) Int. Cl.: H02G 9/06, H02G 3/22, H02G 15/013, F16L 5/10

(54) **DICHTELEMENT FÜR KABELSCHUTZROHR**
SEALING ELEMENT FOR PROTECTION TUBE FOR A CABLE
ÉLÉMENT D'ÉTANCHÉITÉ POUR FOURREAU

(30) Priorität: 07.09.2016 DE 102016116740
(43) Veröffentlichungstag der Anmeldung: 14.03.2018
(73) Patentinhaber: gabo Systemtechnik GmbH, 94559 Niederwinkling (DE)
(72) Erfinder: GEIGER, Alexander, 94559 Niederwinkling (DE); KARL, Markus, 94327 Bogen (DE); LEDERER, Roland, 94374 Schwarzach (DE)
(74) Vertreter: Schmid, Nils T.F.

(56) Entgegenhaltungen:
- EP-A1- 1 187 287
- DE-C1- 3 739 714
- DE-C1- 4 416 682
- DE-C2- 4 225 916
- US-A- 3 562 847

## Beschreibung

Die Erfindung betrifft ein Dichtelement zum Einsetzen in ein Kabelschutzrohr, das unterirdisch zu verlegen ist und Kabel zum Leiten von Daten und/oder Elektrizität aufnimmt.

Ein gattungsgemäßes Dichtelement ist aus DE 42 25 916 C2 bekannt, bei dem ein Einsatz aus offenporigem Schaumstoff-Kunststoff aus in Scheibenform und mit Übergröße in ein konisches Gehäuse in Topfform eingesetzt ist. Das bekannte Dichtelement sowie aber auch der vorliegenden Erfindung hat die Bestimmung, eine Eintritts- oder Austrittsöffnung in das Kabelschutzrohr, das die aufgenommenen Kabel umgibt, gegen Schwemmsand abzudichten, wobei das mechanische Einführen von Kabeln in das unterirdisch verlegte Kabelschutzrohr möglich bleibt. Der Mantel des Gehäuses ist in axialer Längsrichtung geschlitzt und hat eine Sollbruchstelle, damit das Gehäuse über bereits eingezogene Kabel aufgebogen und für unterschiedliche Rohrinnendurchmesser angepasst werden kann. Da im Bereich der Netzwerktechnik ein großer Mengenbedarf an Kabeln und Kabelschutzrohren besteht, ist das Interesse an geringen Herstellungskosten groß.

EP 1 187 287 A1 betrifft eine teilbare Einzelzugabdichtung für Kabel. Aus DE 37 39 714 C1 ist eine Vorrichtung zum Abschließen und Abdichten des freien Endes eines Kabelführungsrohres bekannt. DE 44 16 682 C1 beschreibt ein Kabel-Schutzrohr und ein Verfahren zur Herstellung desselben. Aus US 3,562,847 geht eine geschlitzte runde Buchse hervor.

Es ist Aufgabe der Erfindung, die Nachteile des Stands der Technik zu überwinden, insbesondere ein Dichtelement zum Einsetzen des Endes des Kabelschutzrohres derart weiterzuentwickeln, dass bei Einhaltung der Funktionsvoraussetzungen der Dichtigkeit, insbesondere der Schwemmsanddichtigkeit, die Herstellungskosten deutlich gesenkt werden können, wobei insbesondere auch für ungeübtes Montagepersonal eine zuverlässige Montage des Dichtelements an dem Kabelschutzrohr sichergestellt bleibt.

Diese Aufgabe wird durch Anspruch 1 gelöst.

Danach besteht das Dichtungselement insbesondere ausschließlich aus einem Schaumstoffkörper in Scheibenform oder Zylinderform aus einem offenporigen, dauerelastischen Kunststoff-Schaumstoff gebildet, der eine Rohdichte von weniger als 110 kg/m³ aufweist und ist dazu bestimmt, in ein zu verlegendes oder bereits verlegtes Kabelschutzrohr oder in einen in das Kabelschutzrohr zu montierendes Schutzhülsengehäuse eingepresst zu werden. Das Dichtungselement besteht insbesondere ausschließlich aus dem Schaumstoffkörper und benötigt gegebenenfalls nur das Hülsengehäuse, um das erfindungsgemäße Dichtelement zu bilden und um ein verletzungsfreies Montieren des Schaumstoffkörpers in das Kabelschutzrohr zu realisieren. Das Dichtungselement kann allerdings auch ohne entsprechendes Hülsengehäuse seine Dichtungsfunktion und Montagefähigkeit entfalten. Vorzugsweise ist das Dichtelement betreffend der Form dem von DE 42 25 916 C2 gleich aufgebaut, so dass dessen Inhalt bezüglich der Konturdetails als Referenz eingearbeitet sein soll.

Erfindungsgemäß ist die Rohdichte mit weniger als 110 kg/m³ deutlich geringer als bei herkömmlichen Schaumstoffkörpern, die mit Rohdichten von zwischen 150 kg/m³ bis 200 kg/m versehen werden. Versuche der Anmelderin zeigten, dass es bei deutlicher Reduzierung der Rohdichte unter 110 kg/m³ die Dichtigkeitsfunktion, insbesondere die Schwemmsanddichtigkeit, überraschenderweise nicht oder kaum beeinflusst wurde, allerdings der Materialaufwand deutlich reduziert werden kann. Selbst bei einer Herstellungstoleranz des Schaumstoffkörpers bezüglich der Rohdichte von ± 15 %, maximal ± 15 kg/m³, kann erfindungsgemäß eine deutliche Materialersparnis erreicht werden, wobei die Dichtigkeitsnormen vollständig erfüllt bleiben.

Die Rohdichte wird nach ISO 845 bestimmt und ist in der Fachwelt auch als geometrische Dichte oder Raumgewicht genannt. Die Rohdichte des erfindungsgemäßen Schaumkörpers kann auch kleiner als 100 kg/m³ oder 90 kg/m³ ausgewählt werden. Es zeigte sich im Besonderen, dass eine Mindestrohdichte von wenigstens 50 kg/m³ nicht unterschritten werden sollte, wobei vorzugsweise eine Mindestrohdichte von wenigstens 60 kg/m³ als Mindestrohdichte von Vorteil ist. Der erfindungsgemäße Rohdichtenbereich des offenporigen Schaumstoffs liegt zwischen 50 kg/m³ und 110 kg/m³, insbesondere 55 kg/m³ und 110 kg/m³, 60 kg/m³ und 110 kg/m³, 65 kg/m³ und 110 kg/m³ oder 70 kg/m³ und 110 kg/m³. Ausreichende Dichtungsergebnisse bei deutlich reduziertem Raumgewicht werden erreicht, wenn ein Schaumstoffkörper mit einem offenporigen Kunststoff-Schaumstoff von 65 kg/m³ bis 85 kg/m³, insbesondere 70 kg/m³ bis 80 kg/m³, insbesondere ± 15 % (oder ± 3 kg/m³) ausgewählt ist. Erfindungsgemäß reichen deutlich leichtere Kunststoffkörper mit einer Dichte von bis zur Hälfte des Raumgewichts von bekannten Schaumstoffkörpern aus, um die Dichtigkeit zu erfüllen. Es zeigte sich bei Versuchen, dass ein offenporiger Schaumstoff mit einer Rohdichte von etwa 75 kg/m³ oder 77 kg/m³ sehr gute Dichtungsergebnisse erzielt, wobei eine deutliche Materialeinsparung erreicht wird.

Das Material für den Schaumstoff ist vorzugsweise ein dauerelastischer, feinporiger, imprägnierbarer Weichschaum, wobei insbesondere die Imprägnierung weichmacherfrei aus einem Polyurethan gebildet sein kann. Es können auch andere Materialien für den offenporigen Schaumstoff genutzt werden, der die gewünschte Rohdichte aufweist.

Bei einer bevorzugten Ausführung der Erfindung ist ein Außendurchmesser des zylinderförmigen oder unter Umständen leicht kegelstumpfförmigen (der minimale Außendurchmesser) Schaumstoffkörpers in dessen unmontierten Zustand im Vergleich zu einem größten Innendurchmesser des Kabelschutzrohres an dessen offenen Einsatzende, wo das Dichtelement einzusetzen ist, oder im Vergleich zu einem größten Innendurchmesser eines Hülsengehäuses des Dichtelementes um mindestens 15 % größer, vorzugsweise in einem Bereich zwischen 15 % und 35 %, insbesondere zwischen 17 % und 28 % größer. Vorzugsweise ist das Dichtungselement mit einem Außendurchmesser von 50 mm oder mehr dimensioniert, es soll allerdings vorzugsweise kleiner als 250 mm oder 200 mm gebildet sein. Ein bevorzugter Außendurchmesserbereich kann zwischen 80 mm und 160 mm definiert sein. Bei einem Hülsengehäuse sind entsprechende Innendurchmesser relevant. Der Außendurchmesser des Schaumstoffkörpers im unmontierten Zustand ist entsprechend der erfindungsgemäß definierten Übermaß größer.

Vorzugsweise ist das Hülsengehäuse aus einem starren Material, wie Kunststoff oder Metall, gefertigt, insbesondere gespritzt.

Es zeigte sich, dass bei diesen Übergrößen des Schaumstoffkörpers eine ausreichende Dichtigkeit des Dichtelements erreicht wird, ohne dass größere Rohdichten von 150 kg/m³ oder mehr in Betracht gezogen werden müssen. Insbesondere bei einer Rohdichte von 70 kg/m³ bis 80 kg/m³ und einer Übergröße von wenigstens 15 % ausreichen, um die Dichtigkeitsvoraussetzungen zu erfüllen. Eine Übergröße von mehr als 35 % ist, insbesondere nicht notwendig, um die Dichtigkeitsvoraussetzungen selbst bei geringen Rohdichten zu erfüllen.

Bei einer Weiterbildung der Erfindung ist der Schaumstoffkörper mit abtrennbaren vorgeformten Ausschnitten oder Ausstanzungen versehen, welche über Soll-Abrissstellen an dem Schaumstoffkörper gehalten sind, um eine bauliche Schaumstoffkörper-Einheit zu bilden. Die Ausstanzungen dienen dazu, abmessungsgetreue Durchgänge in dem Schaustoffkörper zu schaffen, damit dort Kabel hindurchgeführt werden können, die das Kabelschutzrohr verlassen. Die Ausschnitte oder Ausstanzungen bilden in Axialrichtung durchgehende, vorgegebene Kontaktinnenflächen, die sich paarweise gegenüberliegen und bei verbleibenden Ausstanzungen und Ausschnitten eine Abdichtung gegen Schwemmsand realisieren. Diese Kontaktflächen bilden Dichtflächen mit dem einen oder mehreren Kabeln und münden in die Soll-Abrissstelle, um eine oder mehrere Ausschnitte oder Ausstanzungen von dem Schaumstoffkörper abtrennen zu können, die an die Abmessung vorbestimmter Kabel angepasst sind. Vorzugsweise sind die Innenflächen kreisabschnittsförmig zum passgenauen Anschmiegen an die insbesondere zylindrischen Kabel.

Bei einer Weiterbildung der Erfindung ist die Rohdichte des Schaumstoffkörpers derart unterhalb von 110 kg/m³ und insbesondere die Übergröße des Schaumstoffkörpers gegenüber der Innenseite des Kabelschutzrohres oder des Hülsengehäuses festgelegt, dass eine insbesondere genormte Feinsanddichtigkeitsprüfung erfolgreich durchgeführt wird.

Eine derartige Feinsanddichtigkeitsprüfung kann beispielsweise durch den Einbau von verschiedenen Rohrgrößen in einen Presskasten mit einer Abmessung von beispielswiese 1 m × 0,5 m erfolgen. Das in den Kasten hineinragende Rohrende wird mit der jeweiligen Maximalzahl von Kabeln belegt. Anschließend wird der Kasten mit Sand gefüllt und verdichtet. Im Verlauf von vier Wochen werden einmal pro Tag 30 1 Wasser auf die Oberfläche der Füllung ausgegossen. Nach Ablauf von vier Wochen ist zu prüfen, ob das Dichtelement neben dem durchgesickerten Wasser auch Sand durchgelassen hat. Die Feinsandprüfung war erfolgreich, wenn Sand nicht in großen Mengen in das Rohr eingedrungen ist. Eine sehr geringe Menge an Sand ist nicht vermeidbar.

Bei einer Weiterbildung der Erfindung ist zumindest an einer Außenstirnseite, insbesondere ausschließlich an einer Außenstirnseite des scheibenförmigen Dichtelements, die vorzugsweise von der Innenseite des Kabelschutzrohres nach außen abgewandt ist, eine Folie insbesondere aus PET aufkaschiert. Vorzugsweise ist die vollständige Außenstirnseite mit der Folie bedeckt, wobei insbesondere im Verlauf der Ausstanzungsränder ebenfalls die Folien längs der Ränder aufgetrennt sind. Vorzugsweise ist die Folie mit einer Stärke von weniger als 100 µm, vorzugsweise zwischen 10 µm und 60 µm, vorzugsweise etwa 30 µm, versehen.

Bei einer bevorzugten Ausführung der Erfindung ist der Schaumstoffkörper in das insbesondere starre Hülsengehäuse vorzugweise aus Kunststoff eingesetzt, das eine Behälterform mit einem Boden oder Sacklochboden und einer axial gegenüberliegenden Einsetzöffnung aufweist. Zur Montage des übergroßen Schaumstoffkörpers in das Hülsengehäuse wird dieser in die Einsetzöffnung eingesetzt. Vorzugsweise ist zwischen der Einsetzöffnung und dem Sacklochboden insbesondere einstückig ein zylindrischer oder leicht konischer Hülsenmantel vorgesehen, Der leicht konische Hülsenmantel hat vorzugsweise eine Konizität, bei der der Mantel hin zum Boden des Hülsengehäuses leicht zunimmt. Eine leichte konische Form ist dann insbesondere gebildet, wenn die Konizität unter 10° oder 5° gegenüber der Axialrichtung liegt.

Das Hülsengehäuse kann an der Einsatzöffnung einen sich radial nach außen erstreckenden Anlagebund aufweisen, der eine Anlagefläche zum Positionieren des Dichtelements definieren kann. Alternativ und/oder zusätzlich dazu ist das Hülsengehäuse in Längsrichtung derart geschlitzt, dass es ein montiertes Kabel längs dessen Umfang, nach radialem Aufweiten des Hülsengehäuses, umgreifen kann. Dabei ist die Schlitzung betreffend den Hülsenmantel in Axialrichtung voll durchgängig und der Boden des Hülsengehäuses zumindest hin bis zu einer radialen Mitte ausgeführt.

Bei einer Weiterbildung der Erfindung ist das Hülsengehäuse wenigstens mit einem Soll-Abtrennabschnitt gebildet, durch den das Hülsengehäuse um einen insbesondere teilbehälterförmigen Soll-Abtrennabschnitt reduziert werden kann, so dass es sich unterschiedlich großen Umfangsabmessungen anpassen kann.

Der wenigstens eine Soll-Abtrennabschnitt ist von zwei sich in Axialrichtung erstreckenden Schlitzen begrenzt und mit dem Hülsenkörper beidseits mittels wenigstens einer Sollbruchstelle im Bereich des Anlagebunds gekoppelt.

Erfindungsgemäß ist insbesondere jeder Soll-Abtrennabschnitt ausschließlich im Bereich des Anlagebunds mit dem restlichen Hülsengehäuse trennbar fixiert, wobei auf einer Endrandseite des Soll-Abtrennabschnitts am Anlagebund eine einzige schwache Sollbruchstelle ausgebildet ist, während an der gegenüberliegenden Endrandseite des Soll-Abtrennabschnitts im Bereich des Anlagebunds wenigstens zwei starke Sollbruchstellen ausgeführt sind, so dass die Abtrennkraft zum Trennen auf der einen Endrandseite kleiner als auf der anderen Seite ist. Auf diese Weise soll gewährleistet sein, dass eine einzelne Sollbruchstelle zuerst gebrochen werden kann, ohne den Soll-Abtrennabschnitt vollständig von dem restlichen Hülsengehäuse zu lösen. Dabei bildet der Soll-Abtrennabschnitt eine Versteifung, über die das gesamte Hülsengehäuse inklusive des wenigstens einen über die starken Sollbruchstellen angebundenen Soll-Abtrennabschnitts aufgeweitet werden kann. Zur Reduzierung des Umfangs des Hülsengehäuses kann dann die verstärkte Sollbruchstelle gebrochen werden und damit kann der eine Soll-Abtrennabschnitt entfernt werden. Vorzugsweise können zwei, drei oder mehrere Soll-Abtrennabschnitte für ein Hülsengehäuse vorgesehen sein, die vorzugsweise unterschiedlich groß sein können, um unterschiedliche Umfangsanpassungen vornehmen zu können. Die jeweiligen Soll-Abtrennabschnitte sind mit starken Sollbruchstellen an einem benachbarten Soll-Abtrennabschnitt oder an dem Hülsengehäuse insbesondere im Bereich des Anlagebunds gefestigt.

Auf den Anlagebund können konzentrische Anzeigeelemente, wie Pfeile visuell sichtbar sein, die sich insbesondere kreisabschnittsförmig längs des Soll-Abtrennabschnitts erstrecken und aufeinander zu gerichtet sind, um eine Justierung des verbleibenden Hülsengehäuses bei Abtrennung des Soll-Abtrennabschnitts zu einen im Wesentlichen zylindrischen oder leicht konischen, geschlitzten Hülsengehäuses reduzierten Umfangs zu gewährleisten.

Bei einer Weiterbildung der Erfindung hat der offenporige Schaumstoffkörper eine axiale Länge, die größer ist als der maximale Durchmesser des Schaumstoffkörpers, insbesondere wenigstens 50 % größer ist. Alternativ oder zusätzlich kann die axiale Länge oder axiale Stärke des offenporigen, vorzugsweise zylindrischen Schaumstoffkörpers insbesondere bei einem Außendurchmesser (in unkomprimiertem Zustand) von 50 mm bis 100 mm, größer als 50 mm, 60 mm, 80 mm oder 100 mm, zwischen 50 mm und 100 mm, vorzugsweise 55 mm und 80 mm, vorzugsweise zwischen 60 mm und 75 mm, insbesondere bei etwa 60 mm ± 5 mm oder 75 mm ± 5 mm liegt.

Bei einer bevorzugten Weiterbildung der Erfindung ist der Anlagebund des Hülsengehäuses, der in einer radialen Ebene liegt, nicht durch einen kontinuierlich umlaufenden (unter Umständen von der Sollbruchstelle getrennten) Ringabschnitt gebildet, sondern durch eine Vielzahl von, insbesondere mehr als 10 oder 15, sich von dem Hülsenmantel des Hülsengehäuses radial nach außen erstreckenden Lamellen oder Plättchen gebildet, wobei insbesondere die in Umfangsrichtung angeordnete Reihe von Lamellen jeweils zwei unterschiedliche Erstreckungen nach innen aufweisen, wobei vorzugsweise die radiale Erstreckung sämtlicher Lamellen nach außen im Wesentlichen gleich groß ist. Zudem sind die unterschiedlichen Radialerstreckungen in Umfangsrichtung abwechselnd vorgenommen.

Der Anlagebund des Hülsengehäuses ist vorzugsweise mit einem oder mehreren radial nach innen ragenden Vorsprüngen versehen, der über der Abmessung der Innenseite des Hülsenmantels radial nach innen vorsteht, um eine Festhaltefunktion des eingesetzten Schaumstoffkörpers zu gewährleisten, der von den radial nach innen vorspringenden Anlagebundabschnitten axial gehalten wird. Auf diese Weise ist das Montieren aufgrund der axial unbeweglichen Halterung des Schaumstoffkörpers innerhalb des Hülsengehäuses vereinfacht.

Weitere Vorteile, Merkmale und Eigenschaften der Erfindung sind in den Unteransprüchen angegeben.

Weitere Eigenschaften, Vorteile und Merkmale der Erfindung werden durch folgende Beschreibung einer bevorzugten Ausführung der Erfindung anhand der beiliegenden Zeichnungen deutlich, in denen zeigen:
- Fig. 1: eine perspektivische Ansicht einer Ausführung des Dichtelements gemäß der Erfindung;
- Fig. 2: eine Draufsicht auf ein Hülsengehäuse gemäß des Dichtelements nach Fig. 1;
- Fig. 3: eine Draufsicht auf den offenporigen Schaumstoffkörper des Dichtelements gemäß Fig. 1, ohne in das Hülsengehäuse eingesetzt zu sein;
- Fig. 4: eine perspektivische Ansicht eines erfindungsgemäßen Dichtelements in einer weiteren Ausführung;
- Fig. 5: eine Draufsicht auf das Hülsengehäuse des Dichtelements gemäß Fig. 4;
- Fig. 6: eine Draufsicht auf den offenporigen Schaumstoffkörper des Dichtelements gemäß Fig. 4;
- Fig. 7: eine perspektivische Ansicht eines Dichtelements in einer weiteren Ausführung der Erfindung;
- Fig. 8: eine Draufsicht auf das Hülsengehäuse gemäß Fig. 7, ohne dass der Schaumstoffkörper eingesetzt ist; und
- Fig. 9: eine Draufsicht auf den offenporigen Schaumstoffkörper gemäß dem Dichtungselement nach Fig. 7.

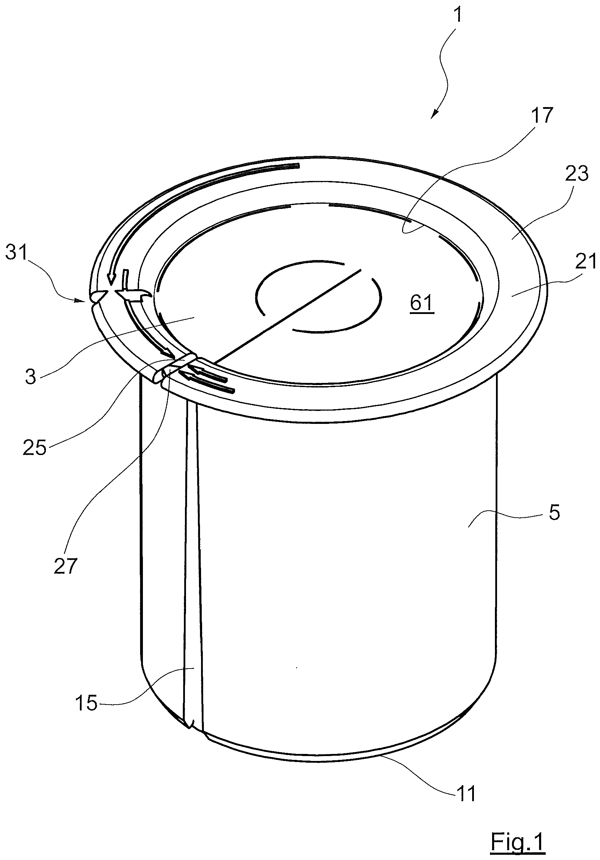

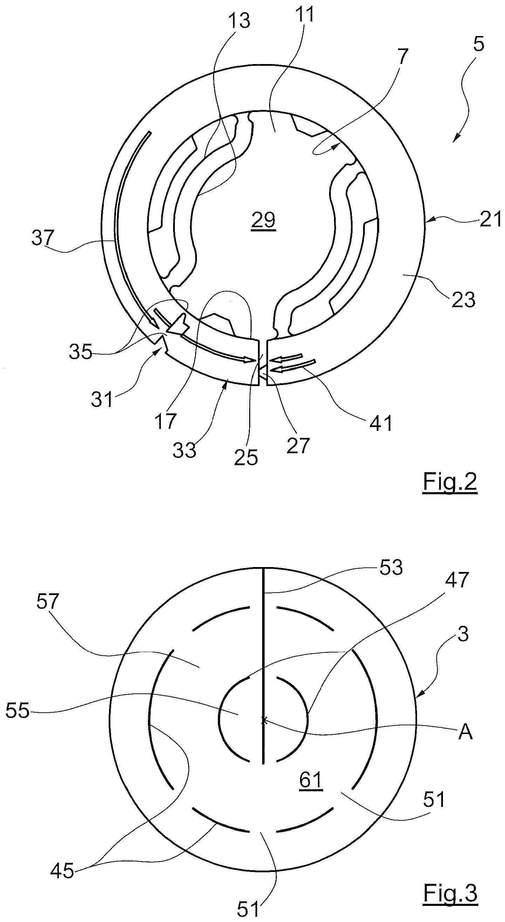

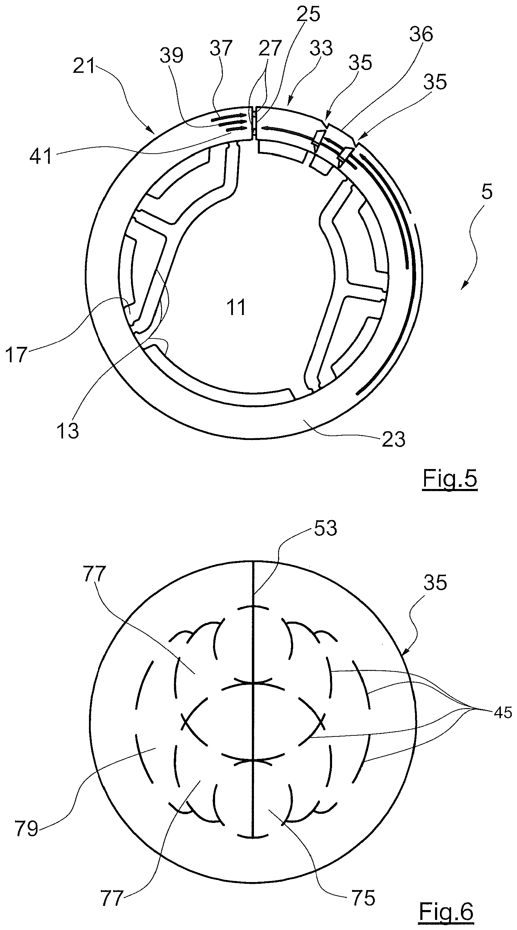

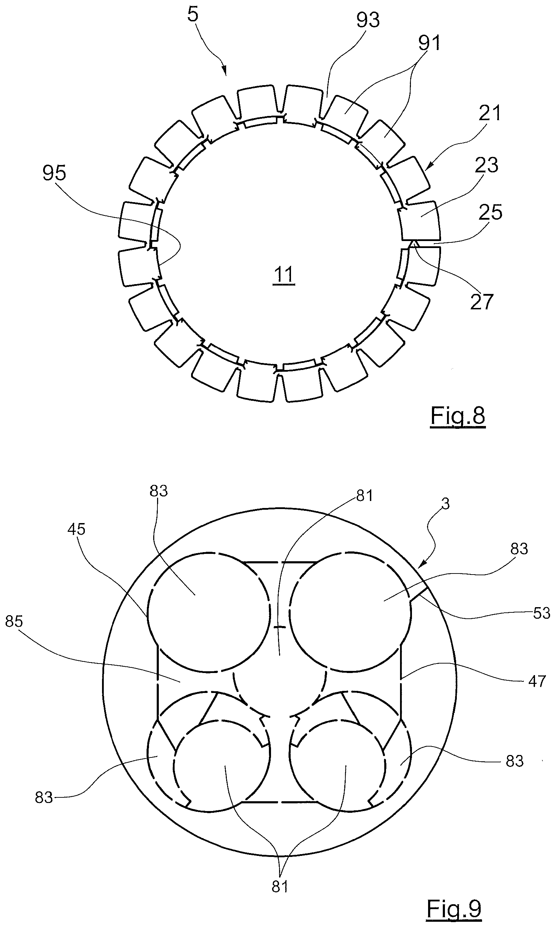

In den Figuren sind drei unterschiedliche Ausführungen der Erfindung dargestellt, wobei in Fig. 1, 4 und 7 das Dichtelement vollständig abgebildet ist, d.h. mit Hülsengehäuse 5 und Kunststoff-Schaumstoffkörper 3, während Fig. 2, 3, 5, 6, 8 und 9 die jeweiligen ausschließlichen Einzelbestandteile, Kunststoff-Schaumstoffkörper 3 bzw. Hülsengehäuse 5, darstellen. Es sei klar, dass ein wesentlicher Aspekt des Dichtelements 1 der Kunststoff-Schaumstoffkörper 3 ist, der gegebenenfalls mit einem Hülsengehäuse 5 kombiniert sein kann.

Das erfindungsgemäße Dichtelement 1 dient dazu, ein nicht näher dargestelltes Ende eines Kabelschutzrohres abzudichten, das bereits mit Kabeln oder Mikrorohren bestückt ist. Kabel werden im Allgemeinen lose innerhalb des starren Kabelschutzrohres aufgenommen und führen dichtend durch das erfindungsgemäße Dichtelement 1 hindurch.

Fig. 1, 2 und 3 zeigen die Bestandteile einer ersten Ausführung des Dichtelements gemäß der Erfindung, das als Hauptbestandteile den scheiben- oder zylinderförmigen Kunststoff-Schaumkörper 3 und das Hülsengehäuse 5 aufweist.

Das Hülsengehäuse 5 gemäß Fig. 2 hat eine Topfform mit einem leicht konisch geformten Hülsenmantel 7 und einem Stirnwandboden 11, der mit Sollbruchlinien 13 versehen ist, die sich gekrümmt erstrecken und ein abschnittsweises Ausbrechen ermöglicht. Die Sollbruchstellen 13 verlaufen linienförmig von einem Umfangsendrand zum anderen Umfangsemdrand, wobei der Umfangsendrand einen Übergangsbereich zwischen dem Stirnwandboden 11 und dem Hülsenmantel 7 des Hülsengehäuses 5 bildet.

Der Hülsenmantel 7 ist im Wesentlichen konisch oder kegelstumpfförmig, wobei der Innendurchmesser des Hülsenmantels 7 von dem Stirnwandboden 11 hin zu einer vorderen Einsetzöffnung 17 leicht abnimmt. Der Konizitätswinkel zur Axialrichtung A ist geringer als 10°. Damit soll gewährleistet sein, dass zumindest im Bereich der Einsetzöffnung eine gute Dichtung bezüglich des eingesetzten Kunststoff-Schaumkörpers 3 entsteht. Des Weiteren umfasst der Hülsenmantel 7 einen ersten Längsschlitz 15, der in dem Übergangsbereich zwischen Hülsenmantel 7 und dem Stirnwandboden 11 endet, wobei der Längsschlitz 15 sich in den Stirnwandboden 11 hineinerstrecken kann. Der Längsschlitz 15 eröffnet das radial-umfangs-gerichtete Aufweiten des Hülsenmantels 7, um die Montage / das Umgreifen des Dichtelements 1 um wenigstens ein Kabel oder Mikrorohr zu vereinfachen, das von dem Kabelschutzrohr aufgenommen ist. An dem dem Stirnwandboden 11 gegenüberliegenden Ende des Hülsenmantels 7 ist die Einsetzöffnung 17 durch den Hülsenmantel 7 definiert. An diesem Ende ist außerdem ein sich radial erstreckender, im Wesentlichen umlaufender Anlagebund 21 ausgebildet, der eine ringförmige Anlagefläche 23 formt, die in Anlage mit einem nicht dargestellten Mauerabschnitt eines Gebäudes/Kellers kommen kann. Auch die der außenseitigen Anlagefläche 23 gegenüberliegenden Anlagefläche des Anlagebunds 21 kann plan ausgeführt sein, um ein Anlegen des Hülsengehäuses 5 auch dort sicherzustellen.

Wie in Fig. 1 ersichtlich ist, hat der Anlagebund 21 eine sich radial erstreckende Schlitzverlängerung 25, die sich an dem Längsschlitz 15 des Hülsenmantels 7 fortsetzt. An der radialen Schlitzverlängerung 25 ist ein im Wesentlichen dreieckförmiger Anschlag 27 vorgesehen, der eine Abstandshaltung der beiden Stirnenden des Anlagebunds 21 festlegt, die einen Spalt von größer 1 mm der Schlitzverlängerung 25 begrenzen. Um eine bauliche Einheit zu bilden, kann das schmale Ende des Anschlags 27 gemäß einer Sollbruchstelle mit dem gegenüberliegenden Rand des Anlagebunds 21 fest gekoppelt, insbesondere einstückig gebildet sein. Damit ist ein sicherer Transport des Dichtelements 1, insbesondere des Hülsengehäuses 5, gewährleistet, wobei zum Aufweiten des Hülsengehäuses 5 in radialer Richtung und in Umfangsrichtung ein Lösen dieser Sollbruchstelle notwendig ist. Diese Sollbruchstelle soll auch als schwache Sollbruchstelle verstanden sein.

Erfindungsgemäß ist ein weiterer Längsschlitz (nicht näher dargestellt) in dem Hülsenmantel 7 eingearbeitet, der in einen Schwächungsbereich 31 des Anlageflansches 21 mündet. Der Schwächungsbereich 31 hat zwei Aussparungen, welche zwei starke Sollbruchbrücken 35 definieren, die dazu dienen, einen Soll-Abtrennabschnitt 33 von dem restlichen Hauptkörper des Hülsengehäuses 5 abtrennbar zu machen. Die Sollbruchbrücken 35 halten erst einmal den Soll-Abtrennabschnitt 33 und den restlichen Hauptkörper des Hülsengehäuses 5 zu einer Montageeinheit, so dass beim Aufweiten des Hülsengehäuses 5 mit unversehrten Sollbruchbrücken 35 das gesamte Hülsengehäuse 5 aufgeweitet werden kann. Werden die Sollbruchbrücken 35 abgetrennt, wird der Soll-Abtrennabschnitt 33 lose und kann von dem Hülsengehäuse 5 entfernt werden, wodurch der Umfang des Hülsengehäuses 5 umfangsseitig deutlich reduziert werden kann. In der in Fig. 1 bis 3 dargestellten Ausführung des Hülsengehäuses 5 beträgt die Umfangsbreite des Abtrennabschnitts 33 etwa 15° bis 30°, um eine gewünschte Umfangsreduzierung zu bieten.

Auf radialer Höhe derjenigen Sollbruchbrücke 35, die weiter außen an der Anlagefläche 23 des Anlagebunds 21 liegt, sind kreisabschnittsförmige Positionsorientierungspfeile 37, 41 dargestellt, die mit weiteren Pfeilen auf den Anlagebund 21 des restlichen Hülsengehäuses 5 auszurichten sind, wobei die Pfeile 37, 41 aufeinander zu zeigen und auf der gleichen konzentrischen Umfangsposition liegen. Auf diese Weise kann ein Monteur eine unkonzentrische Verwerfungsverformung des Hülsengehäuses 5 erkennen und korrigierend eingreifen, damit ein im Wesentlichen zylindrischer oder kegelstumpfförmiger Innenraum des Hülsengehäuses 5 geformt wird, nachdem der Soll-Abtrennabschnitt 33 entfernt wurde, was die Dichtungsfunktion des Dichtelements 1 sicherstellt.

Der Kunststoff-Schaumstoffkörper 3 hat eine im unmontierten Zustand ausgebildet zylindrische Scheibenform, wobei die axiale Länge des Kunststoff-Schaumkörpers 3 deutlich größer als der Durchmesser des Kunststoffschaumkörpers 3 ist. Vorzugsweise ist eine axiale Überlänge von 150 % des von mehr als 130 % des Durchmessers des Kunststoffkörpers vorgesehen.

Wie beim Vergleich des Innenraums 29 des Hülsengehäuses 5 insbesondere dessen maximale Durchmesserabmessung mit der Durchmesserabmessung des zylindrischen Kunststoffschaumkörpers 3 ersichtlich ist, hat letztere eine Übergröße von wenigstens 10 % oder 15 %. In der in Fig. 1 bis 3 dargestellten Ausführung beläuft sich die Übergröße auf etwa 24 % bis 26 %.

Der Kunststoff-Schaumstoffkörper 3 hat kreisringförmige, konzentrische Ausstanzungen 45, 47, welche jeweils auf einer zur Achse A konzentrischen Kreislinie liegen und von Sollrissstellen 51 unterbrochen sind. Die Sollrissstellen 51 bilden eine Länge zwischen den benachbarten Enden der Ausstanzungen von etwa 0,5 cm bis 2 cm. Auf diese Weise besteht die Möglichkeit, das Dichtelement 1 mit kreiszylindrischen Öffnungen zu bilden, in denen Kabel oder Mikrorohre durchgeführt werden können, die in dem nicht näher dargestellten Kabelschutzrohr unterzubringen sind. Bei der in Fig. 1 bis 3 dargestellten Ausführung sind zwei unterschiedlich große Kabelgrößen vorgesehen. Die kreisringförmigen Ausstanzungen 45, 47 sind konzentrisch zueinander angeordnet.

Des Weiteren ist zur vereinfachten Montage der einzusetzenden Kabel ein radialer Längsaufschnitt 53 vorgesehen, der sich von der Außenseite des Hülsengehäuses 5 radial nach innen erstreckt, insbesondere über die Mitte des Kunststoff-Schaumstoffkörpers 3 hinaus.

Bei Heraustrennen des kleinen Dichtelementabschnitts 55 kann aufgrund des Längsaufschnitts 53 eine einfache Montage durch Aufweiten des Kunststoff-Schaumstoffkörpers 3 und Umgreifen des abzudichtenden Kabels realisiert werden.

Bei den Ausstanzungen 55, 57 sind Dichtflächen 45, 47, 53, die sich axial erstrecken, eng aneinander liegend gebildet, wobei das flächige Anliegen durch die Übergröße des Kunststoff-Schaumkörpers 3 gegenüber dem Hülsengehäuse verstärkt wird, wenn der Kunststoff-Schaumkörper 3 in den Innenraum 29 des Hülsengehäuses 5 eingesetzt ist. Nachdem die Ausstanzungen oder Schaumkörperabschnitte 55, 57 aus dem Verbund des Kunststoff-Schaumkörpers 3 herausgelöst sind, bilden die Dichtflächen 45, 47, 53 tatsächliche Abdichtungsflächen mit den von dem Kabelschutzrohr aufgenommenen Kabeln, die in den Figuren nicht näher dargestellt sind.

Der Kunststoff-Schaumstoffkörper 3 hat an seiner im eingesetzten Zustand nach außen gewandten Stirnseite 61 eine aufkaschierte Folie, insbesondere eine Schutzfolie aus PET. Die Schutzfolie hat eine Stärke von etwa 30 µm, die das Dichtungsverhalten des in den Innenraum 29 eingepressten Kunststoff-Schaumstoffkörpers 3 deutlich erhöht. Dabei ist es von Vorteil, wenn die dünne aufkaschierte Schutzfolie eine Stärke von 100 µm nicht übersteigt.

Bei dem Kunststoff-Schaumstoffkörper 3 handelt es sich um einen dauerelastischen, offenporigen, feinporigen Polyurethan-Weichschaum, der vorzugsweise imprägniert sein kann. Eine Imprägnierung kann beispielsweise ein modifiziertes Polyacryl ohne Weichmacher sein.

Erfindungsgemäß hat der Schaumstoffkörper 3 eine reduzierte Rohdichte, die gemäß ISO 845 zu bestimmen ist. Sie liegt bei 77 kg/m³ für in Fig. 1 bis 8 dargestellte Ausführungen. Ein Toleranzbereich von ± 15 % soll in Betracht kommen, was von der Präzision der Herstellung des Kunststoff-Schaumstoffkörpers 3 abhängig sein soll.

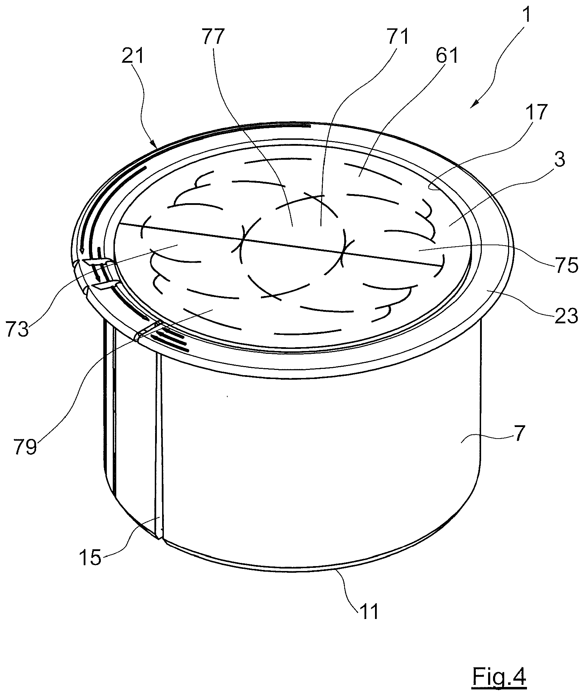

In Fig. 4 bis 6 ist eine weitere Ausführung eines erfindungsgemäßen Dichtelements 1 dargestellt, wobei zur einfacheren Lesbarkeit der Figurenbeschreibung für ähnliche oder identische Bauelemente des Dichtelements 1 die gleichen Bezugszeichen verwendet werden.

Das Dichtelement 1 gemäß Fig. 4 bis 6 unterscheidet sich von der Ausführung nach Fig. 1 bis 3 durch die Gestaltung der Ausstanzungen, wobei in dem Kunststoff-Schaumstoffkörper 3 mehrere unterschiedliche Ausstanzungen 71, 73, 75, 77 und 79 (an der Zahl fünf) vorgesehen sind. Dies dient dazu, unterschiedliche Kabelquerschnitte dichtend im Kunststoff-Schaumstoffkörper 3 aufzunehmen.

Die Dichtflächen 45, 47, 53 sind ebenfalls zum Teil vorgefertigt und durch Ausschnitte gebildet. Bei ungetrennten Ausstanzungen 71, 73, 75, 77 und 79 liegen die Dichtflächen 45, 47, 53 dicht aneinander, so dass das Dichtelement 1 gegen Eintritt von Sand und Wasser abgedichtet ist.

Ein weiterer Unterschied zu der Ausführung nach Fig. 1 bis 3 liegt bei der Ausführung gemäß Fig. 4 bis 6 in der Anzahl der Soll-Abtrennabschnitte 33, von denen zwei vorgesehen sind, wobei der Zweite mit der Bezugsziffer 36 versehen ist. Auf diese Weise kann in zwei Stufen der Umfang des Hülsengehäuses 5 reduziert werden. Die beiden Soll-Abtrennabschnitte 33 und 36 sind über zwei entsprechende Sollbruchbrückenpaare 35 aneinander befestigt und können dort gebrochen werden, um den jeweiligen Soll-Abtrennabschnitt 33, 36 von dem restlichen Hülsengehäuse 5 zu trennen.

Schließlich sind aufgrund des weiteren Soll-Abtrennabschnitts 36 ein zusätzlicher Positionsorientierungspfeil 39 vorgesehen, um die richtige Ausrichtung des verbliebenen Hülsengehäuses 5 zu einem im Wesentlichen kreisrunden bzw. zylindrischen, verkleinerten Hülsengehäuse 5 sicherzustellen.

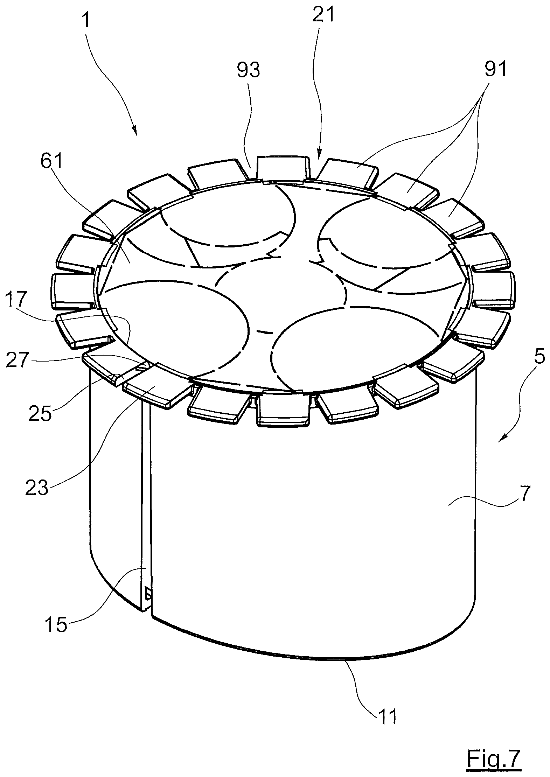

In Fig. 7 bis 9 ist eine weitere erfindungsgemäße Ausführung des Dichtelements 1 angegeben, bei dem auch für ähnliche und identische Bauteile der zu den beiden vorbeschriebenen Dichtelementen mit den gleichen Bezugsziffern versehen sind.

Das Dichtelement 1 gemäß Fig. 7 bis 9 unterscheidet sich von den vorgenannten Dichtelementen 1 in der Ausgestaltung der Ausstanzungen (herauslösbare Schaumkörperabschnitte), wobei zwei kleinste Ausstanzungen 81, drei mittelgroße Ausstanzungen 83 und eine große Ausstanzung 85 mit einem nicht kreisförmigen Querschnitt, für ein von dem Kabelschutzrohr aufzunehmendes Kabel, das einen quadratischen Querschnitt aufweisen kann.

Des Weiteren unterscheidet sich das Hülsengehäuse 5 in der Ausgestaltung des stetig unterbrochenen Anlagebunds 21, der aus einer Vielzahl von sich radial von der Außenseite des Hülsenmantels 7 erstreckenden Platten oder Flügeln 91 gebildet sind, die jeweils in äquidistanten Abständen mit einem Zwischenspalt 93 zueinander angeordnet sind. Abwechselnd von den jeweiligen Bundplättchen 91 erstrecken sich Halteinnenvorsprünge radial nach innen, wobei bei jedem zweiten Plättchen 91 ein radialer Innenvorsprung 95 vorgesehen ist. Diese halten den Kunststoff-Schaumkörper 3 in axialer Richtung fest, so dass dieser die Einsetzöffnung 17 nicht verlassen kann. Im Gegensatz zu den Ausführungen nach Fig. 1 bis 3 und 4 bis 6 hat das Dichtelement 1 gemäß Fig. 7 bis 9 keine Soll-Abtrennabschnitte, sondern nur einen Längsschlitz 15 zum radialen Umfangsaufweiten des Hülsengehäuses 5.

Wie in Fig. 3, 6 und 9 der jeweiligen Dichtelemente 1 ersichtlich ist, hat der Schaumstoffkörper eine Übergröße gegenüber der Innendurchmesserabmessung (größte Abmessung) des Hülsengehäuses 5 von etwa 25 %, die Ausführungen nach Fig. 1 bis 3 etwa 17 % und für die Ausführung nach Fig. 4 bis 6 und etwa 27 % für die Ausführung gemäß Fig. 7 bis 9.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Dichtfläche
- 3: Kunststoff-Schaumkörper
- 5: Hülsengehäuse
- 7: Hülsenmantel
- 11: Stirnwandboden
- 13: Sollbruchlinien
- 15: Längsschlitz
- 17: Einsetzöffnung
- 21: Anlagebund
- 23: Anlagefläche
- 25: Schlitzverlängerung
- 27: Anschlag
- 29: Innenraum
- 31: Schwächungsbereich
- 33,36: Soll-Abtrennabschnitt
- 35: Sollbruchbrücke
- 37, 39, 41: Positionsorientierungspfeile
- 45,47: Dichtfläche
- 51: Sollrissstelle
- 53: Längsaufschnitt
- 55,57: herauslösbarer Schaumkörperabschnitt / Ausstanzungen
- 71, 73, 75, 77, 79: herauslösbarer Schaumkörperabschnitt / Ausstanzungen
- 81: herauslösbarer Schaumkörperabschnitt / kleinste Ausstanzung
- 83: herauslösbarer Schaumkörperabschnitt / mittelgroße Ausstanzung
- 85: herauslösbarer Schaumkörperabschnitt / große Ausstanzung
- 91: Platten/Flügel
- 93: Zwischenspalt
- 95: radialer Innenvorsprung
- A: axiale Längsrichtung

## Patentansprüche

1. Dichtelement (1) zum Einsetzen in ein Kabelschutzrohr, durch das hindurch Kabel unterirdisch verlegt werden, bestehend aus einem Schaumstoffkörper (3) aus einem offenporigen Schaumstoff, wobei der Schaumstoffkörper (3) in ein Hülsengehäuse (5) eingesetzt ist, das eine Behälterform mit einem Boden (11) und einer axial gegenüberliegenden Einsetzöffnung (17) aufweist, wobei zwischen der Einsetzöffnung (17) und dem Boden (11) ein zylindrischer, leicht konischer Hülsenmantel (7) angeordnet ist, wobei das Hülsengehäuse (5) wenigstens einen Soll-Abtrennabschnitt (33,36) aufweist,
**dadurch gekennzeichnet, dass** der offenporige Schaumstoff eine Rohdichte von weniger als 110 kg/m³ und mindestens 50 kg/m³ aufweist, wobei der Soll-Abtrennabschnitt (33,36) in Umfangsrichtung von zwei sich in Axialrichtung (A) erstreckenden Schlitzen (15) begrenzt ist und mit dem Hülsengehäuse (5) beidseits mittels wenigstens einer Sollbruchstelle gekoppelt ist.

2. Dichtelement (1) nach Anspruch 1, **dadurch gekennzeichnet, dass** die Rohdichte kleiner als 100 kg/m³ oder 90 kg/m³ ist.

3. Dichtelement (1) nach Anspruch 1, **dadurch gekennzeichnet, dass** der Außendurchmesser des zylindrischen Schaumstoffkörpers (3) im unmontierten Zustand im Vergleich zu einem größten Innendurchmesser des Kabelschutzrohres an dessen offenen Einsatzende oder zu einem Hülsengehäuse (5) des Dichtelements (1) um mindestens 15 größer ist.

4. Dichtelement (1) nach einem der vorstehenden Ansprüche, **dadurch gekennzeichnet, dass** der Schaumstoffkörper (3) in Axialrichtung durchgehende vorgegebene Kontaktinnenflächen ausweist, die zur Bildung von Dichtflächen mit einem oder mehreren Kabeln in eine Soll-Abrissstelle münden, um eine oder mehrere Ausstanzung(en) oder Ausschneidung(en) von dem Schaumstoffkörper (3) abtrennen zu können.

5. Dichtelement (1) nach einem der vorstehenden Ansprüche, **dadurch gekennzeichnet, dass** die Rohdichte des offenporigen Schaumstoffs derart unterhalb von 110 kg/m³ festgelegt ist, dass eine Feinsanddichtigkeitsprüfung erfolgreich durchgeführt wird.

6. Dichtelement (1) nach einem der vorstehenden Ansprüche, **dadurch gekennzeichnet, dass** zumindest an einer Außenstirnseite des Schaumstoffkörpers (3) eine Folie insbesondere aus PET aufkaschiert ist, die eine Stärke von weniger als 100 µm aufweist.

7. Dichtelement (1) nach einem der vorstehenden Ansprüche, **dadurch gekennzeichnet, dass** ein sich an der Einsetzöffnung (17) radial nach außen erstreckender Anlagebund (21) vorgesehen ist und/oder das Hülsengehäuse (5) in Längsrichtung (A) derart geschlitzt ist, dass es ein montiertes Kabel längs dessen Umfang nach radialem Weiten umgreifen kann.

8. Dichtelement (1) nach einem der vorstehenden Ansprüche, **dadurch gekennz eichnet**, dass zwei oder drei unterschiedlich große Abtrennabschnitte mit jeweiligen Sollbruchstellen zum einzelnen Abtrennen des Soll-Abtrennabschnitts vorgesehen sind.

9. Dichtelement (1) nach Anspruch 8, **dadurch gekennzeichnet, dass** der Soll-Abtrennabschnitt (33, 36) eine Umfangserstreckung von weniger als 45° aufweist, wobei mehrere unterschiedliche Soll-Umfangsabschnitte im Bereich von 10°, 15°, 20° vorgesehen sein können.

10. Dichtelement (1) nach einem der vorstehenden Ansprüche, **dadurch gekennzeichnet, dass** der offenporige Schaumstoffkörper (3) eine axiale Länge aufweist, die größer als der Durchmesser des Schaumstoffkörpers (3) ist und/oder die axiale Länge des Schaumstoffkörpers (3) in einem Bereich zwischen 50 mm und 100 mm liegt.

11. Dichtelement (1) nach einem der vorstehenden Ansprüche, **dadurch gekennzeichnet, dass** die Sollbruchstellen im Bereich eines sich an der Einsetzöffnung (17) radial nach außen erstreckenden Anlagebunds angeordnet sind.

12. Dichtelement (1) nach einem der vorstehenden Ansprüche, **dadurch gekennzeichnet, dass** der wenigstens eine Soll-Abtrennabschnitt (33, 36) ausschließlich im Bereich eines sich an der Einsetzöffnung (17) radial nach außen erstreckenden Anlagebunds mit dem Hülsengehäuse (5) trennbar fixiert ist, wobei auf einer Endrandseite des Soll-Abtrennabschnitts (33, 36) am Anlagebund eine einzige schwache Sollbruchstelle ausgebildet ist, während an der gegenüberliegenden Endrandseite des Soll-Abtrennabschnitts (33, 36) im Bereich des Anlagebunds wenigstens zwei starke Sollbruchstellen ausgeführt sind.

13. Dichtelement (1) nach einem der vorstehenden Ansprüche, **dadurch gekenn**z **eichnet,**dass ein sich an der Einsetzöffnung (17) radial nach außen erstreckender Anlagebund (21) mit einer sich radial erstreckenden Schlitzverlängerung (25) vorgesehen ist, die sich an einem der Schlitze (15) fortsetzt, wobei an der radialen Schlitzverlängerung (25) ein im Wesentlichen dreieckförmiger Anschlag (27) vorgesehen, der eine Abstandshaltung der beiden Stirnenden des Anlagebunds (21) festlegt, wobei insbesondere die Abstandshalterung einen Spalt von größer 1 mm begrenzt und/oder wobei ein schmales Ende des Anschlags (27) gemäß einer Sollbruchstelle mit dem gegenüberliegenden Rand des Anlagebunds (21) fest gekoppelt, insbesondere einstückig gebildet, ist.

14. Dichtelement (1) nach einem der vorstehenden Ansprüche, **dadurch gekennzeichnet, dass** ein sich an der Einsetzöffnung (17) radial nach außen erstreckender stetig unterbrochener Anlagebund (21) mit einer Vielzahl von sich radial von der Außenseite des Hülsenmantels (7) erstreckenden Platten oder Flügeln (91) vorgesehen ist, wobei insbesondere Platten oder Flügel (91) jeweils in äquidistanten Abständen mit einem Zwischenspalt (93) zueinander angeordnet sind.

## Claims

1. Sealing element (1) for insertion into a cable protection tube through which cables are laid underground, comprising a foam body (3) made of an open-cell foam, wherein the foam body (3) is inserted into a sleeve housing (5) which has a container form with a base (11) and an axially opposite insertion opening (17), wherein a cylindrical, slightly conical sleeve jacket (7) is arranged between the insertion opening (17) and the base (11), wherein the sleeve housing (5) having at least one predetermined separating section (33, 36), **characterized in that** the open-cell foam has an bulk density of less than 110 kg/m³ and at least 50 kg/m³, wherein the predetermined separating section (33, 36) is bounded in the circumferential direction by two slots (15) extending in the axial direction (A) and is coupled to the sleeve housing (5) on both sides by means of at least one predetermined breaking point.

2. Sealing element (1) according to claim 1, **characterized in that** the bulk density is less than 100 kg/m³ or 90 kg/m³.

3. Sealing element (1) according to claim 1, **characterized in that** the outer diameter of the cylindrical foam body (3) in the unassembled state is at least 15% larger compared to a largest inner diameter of the cable protection tube at its open insertion end or to a sleeve housing (5) of the sealing element (1).

4. Sealing element (1) according to one of the preceding claims, **characterized in that** the foam body (3) has continuous prearranged inner contact surfaces in the axial direction, which, for the formation of sealing surfaces with one or more cables, open into a predetermined tear point, in order to be able to cut off one or more punchout hole(s) or cutout(s) from the foam body (3).

5. Sealing element (1) according to one of the preceding claims, **characterized in that** the bulk density of the open-cell foam is set below 110 kg/m³ in such a way that a tightness test with fine sand is conducted successfully.

6. Sealing element (1) according to one of the preceding claims, **characterized in that** a film, in particular made of PET, having a thickness of less than 100 µm is laminated at least on an outer end face of the foam body (3).

7. Sealing element (1) according to one of the preceding claims, **characterized in that** an abutment collar (21) extending radially outwardly at the insertion opening (17) is provided and/or the sleeve housing (5) is slotted in the longitudinal direction (A) in such a way that it can embrace a mounted cable along its circumference after radial widening.

8. Sealing element (1) according to one of the preceding claims, **characterized in that** two or three separating sections of different sizes are provided with respective predetermined breaking points for individual separation of the predetermined separating section.

9. Sealing element (1) according to claim 8, **characterized in that** the predetermined separation section (33, 36) has a circumferential extension of less than 45°, wherein several different predetermined circumferential sections in the range of 10°, 15°, 20° may be provided.

10. Sealing element (1) according to one of the preceding claims, **characterized in that** the open-cell foam body (3) has an axial length which is greater than the diameter of the foam body (3) and/or the axial length of the foam body (3) is in a range between 50 mm and 100 mm.

11. Sealing element (1) according to one of the preceding claims, **characterized in that** the predetermined breaking points are arranged in the region of a contact collar extending radially outwards at the insertion opening (17).

12. Sealing element (1) according to one of the preceding claims, **characterized in that** the at least one predetermined separating section (33, 36) is separably fixed to the sleeve housing (5) exclusively in the region of an abutment collar extending radially outwardly at the insertion opening (17), wherein a single weak predetermined breaking point is formed on the contact collar on one end edge side of the predetermined separating section (33, 36), while at least two strong predetermined breaking points are formed on the opposite end edge side of the predetermined separating section (33, 36) in the region of the contact collar.

13. Sealing element (1) according to one of the preceding claims, **characterized in that** an abutment collar (21) extending radially outwardly at the insertion opening (17) is provided with a radially extending slot elongation (25) which continues at one of the slots (15), wherein a substantially triangular stop (27) is provided at the radial slot elongation (25), which fixes a spacing of the two end faces of the abutment collar (21), wherein in particular the spacing limiting a gap of greater than l mm, and/or wherein a narrow end of the stop (27) being firmly coupled, in particular formed integrally, to the opposite edge of the abutment collar (21) in accordance with a predetermined breaking point.

14. Sealing element (1) according to one of the preceding claims, **characterized in that** a continuously interrupted abutment collar (21) extending radially outwardly at the insertion opening (17) is provided with a plurality of plates or wings (91) extending radially from the outside of the sleeve jacket (7), wherein in particular plates or wings (91) are each arranged at equidistant gaps from one another with an intermediate gap (93).

## Revendications

1. Elément d'étanchéité (1) à insérer dans un tube de protection de câbles, à travers lequel sont déposés sous terre des câbles, composé d'un corps en mousse synthétique (3) en mousse à pores ouverts, sachant que le corps en mousse synthétique (3) est introduit dans un manchon (5), qui comporte une forme de récipient avec un fond (11) et une ouverture d'insertion (17) axialement opposée, sachant qu'entre l'ouverture d'insertion (17) et le fond (11) est disposé une enveloppe (7) cylindrique, légèrement conique, sachant que le manchon (5) comporte au moins une section de séparation théorique (33, 36), **caractérisé en ce que** la mousse synthétique à pores ouverts comporte une densité apparente de moins de 110 kg/m³ et d'au moins 50 kg/m³, sachant que la section de séparation théorique (33, 36) est limitée en direction périphérique par deux fentes (15) s'étendant en direction axiale (A) et est couplée au manchon (5) des deux côtés au moyen d'au moins un point de rupture théorique.

2. Elément d'étanchéité (1) selon la revendication 1, **caractérisé en ce que** la densité apparente est inférieure à 100 kg/m³ ou 90 kg/m³.

3. Elément d'étanchéité (1) selon la revendication 1, **caractérisé en ce que** le diamètre extérieur du corps en mousse synthétique (3) cylindrique est au moins de 15 fois supérieur à l'état monté en comparaison d'un diamètre intérieur maximal du tube de protection de câbles à l'extrémité d'insertion ouverte de celui-ci ou d'un manchon (5) de l'élément d'étanchéité (1).

4. Elément d'étanchéité (1) selon l'une quelconque des revendications précédentes, **caractérisé en ce que** le corps en mousse synthétique (3) comporte des surfaces intérieures de contact prédéfinies passant dans le sens axial, qui débouchent dans un point de déchirement théorique pour former des surfaces d'étanchéité avec un ou plusieurs câbles afin de pouvoir séparer un ou plusieurs matriçages ou découpes du corps en mousse synthétique (3).

5. Elément d'étanchéité (1) selon l'une quelconque des revendications précédentes, **caractérisé en ce que** la densité apparente de la mousse synthétique à pores ouverts est définie en dessous de 110 kg/m³ de manière à pouvoir effectuer avec succès un contrôle d'étanchéité au sable fin.

6. Elément d'étanchéité (1) selon l'une quelconque des revendications précédentes, **caractérisé en ce qu'**au moins sur une face frontale extérieure du corps en mousse synthétique (3), une feuille, en particulier de polyéthylène (PET), est laminé, qui comporte une épaisseur de moins de 100 µm.

7. Elément d'étanchéité (1) selon l'une quelconque des revendications précédentes, **caractérisé en ce qu'un** collet d'appui (21) s'étendant sur l'ouverture d'insertion (17) radialement vers l'extérieur est prévu et/ou le manchon (5) est fendu en direction longitudinale (A) de telle manière qu'il peut entourer un câble monté le long de sa périphérie vers la largeur radiale.

8. Elément d'étanchéité (1) selon l'une quelconque des revendications précédentes, **caractérisé en ce que** deux ou trois sections de séparations de tailles différentes sont prévues avec des points de rupture théoriques respectifs pour la séparation individuelle de la section de séparation théorique.

9. Elément d'étanchéité (1) selon la revendication 8, **caractérisé en ce que** la section de séparation théorique (33, 36) comporte une extension périphérique de moins de 45°, sachant que plusieurs sections périphériques théoriques différentes peuvent être prévues dans une plage de 10°, 15°, 20°.

10. Elément d'étanchéité (1) selon l'une quelconque des revendications précédentes, **caractérisé en ce que** le corps en mousse synthétique à pores ouverts (3) comporte une longueur axiale, qui est plus grande que le diamètre du corps en mousse synthétique (3) et/ou la longueur axiale du corps en mousse synthétique (3) se situe dans une plage entre 50 mm et 100 mm.

11. Elément d'étanchéité (1) selon l'une quelconque des revendications précédentes, **caractérisé en ce que** les points de rupture théoriques sont disposés dans une zone d'un collet d'appui s'étendant sur l'ouverture d'insertion (17) radialement vers l'extérieur.

12. Elément d'étanchéité (1) selon l'une quelconque des revendications précédentes, **caractérisé en ce qu'**au moins une section de séparation théorique (33, 36) est fixée pouvant être séparée au manchon (5) exclusivement dans la zone d'un collet d'appui s'étendant sur l'ouverture d'insertion (17) radialement vers l'extérieur, sachant que sur un côté de bordure de la section de séparation théorique (33, 36) est constitué sur le collet d'appui un point de rupture théorique faible individuel, alors que sur le côté de bordure opposé de la section de séparation théorique (33, 36), au moins deux points de ruptures théoriques résistants sont réalisés dans la zone du collet d'appui.

13. Elément d'étanchéité (1) selon l'une quelconque des revendications précédentes, **caractérisé en ce qu'un** collet d'appui (21) s'étendant sur l'ouverture d'insertion (17) radialement vers l'extérieur est prévu avec une prolongation de fente (25) s'étendant radialement, qui se poursuit sur une des fentes (15), sachant que sur la prolongation de fente (25) radiale, une butée (27) pour l'essentiel triangulaire est prévue, qui définit un maintien à distance des deux extrémités frontales du collet d'appui (21), sachant en particulier que le maintien à distance limite un interstice de plus d'1 mm et/ou sachant qu'une extrémité étroite de la butée (27) est fermement couplée conformément à un point de rupture théorique au bord opposé du collet d'appui (21), est formée en particulier en une seule pièce.

14. Elément d'étanchéité (1) selon l'une quelconque des revendications précédentes, **caractérisé en ce qu'un** collet d'appui (21) ininterrompu en continu s'étendant sur l'ouverture d'insertion (17) radialement vers l'extérieur est prévu avec une pluralité de plaquettes ou ailettes (91) s'étendant de celui-ci radialement depuis le côté extérieur de l'enveloppe (7), sachant en particulier que des plaquettes ou ailettes (91) sont respectivement disposées à des intervalles équidistants les unes des autres avec un interstice intermédiaire (93).
